# EUROPÄISCHE PATENTSCHRIFT

(11) **EP 1 060 137 B1**
(45) Veröffentlichungstag und Bekanntmachung des Hinweises auf die Patenterteilung: **29.08.2001**
(21) Anmeldenummer: 99906208.6
(22) Anmeldetag: 27.01.1999
(51) Int. Cl.: C03B 11/06, C03B 11/10

(54) **VERFAHREN ZUM HERSTELLEN VON TRICHTERN VON BILDRÖHREN UND VORRICHTUNG ZUR DURCHFÜHRUNG DES VERFAHRENS**
METHOD FOR PRODUCING CONES OF PICTURE TUBES AND DEVICE FOR CARRYING OUT THIS METHOD
PROCEDE DE FABRICATION DE CONES DE TUBES CATHODIQUES ET DISPOSITIF POUR LA MISE EN OEUVRE DE CE PROCEDE

(30) Priorität: 20.02.1998 DE 19807061
(43) Veröffentlichungstag der Anmeldung: 20.12.2000
(73) Patentinhaber: Schott Glas, 55122 Mainz (DE); CARL-ZEISS-STIFTUNG trading as SCHOTT GLASWERKE, 55122 Mainz (DE)
(72) Erfinder: BORDT, Heinz-G., D-65474 Bischofsheim (DE); SPARSCHUH, Georg, D-55459 Aspisheim (DE)
(74) Vertreter: Fuchs Mehler Weiss & Fritzsche
(86) Internationale Anmeldenummer: EP9900522
(87) Internationale Veröffentlichungsnummer: WO9942412

(56) Entgegenhaltungen:
- DE-U- 29 804 371
- FR-A- 2 260 540
- US-A- 3 399 799

## Beschreibung

Die Erfindung betrifft ein Verfahren zum Herstellen von Trichtern von Bildröhren mit angeformten Justier-Anlageflächen, Pads genannt, nach der Preßtechnologie, mit den Schritten:
- Zuführen eines schmelzflüssigen Glaspostens in eine der äußeren Kontur des Preßlings entsprechende Form,
- Verpressen des Glaspostens mittels eines die innere Kontur des Preßlings vorgebenden Stempels und eines auf der Form aufliegenden, am Stempel federnd befestigten Ringes zu dem Trichter mit flächiger umlaufender Oberkante und angeformten Pads.

Die Erfindung betrifft ferner eine Vorrichtung zum Herstellen von Trichtern von Bildröhren mit angeformten Justier-Anlageflächen, Pads genannt, durch Pressen, mit
- einer Form, die eine der äußeren Kontur des Preßlings entsprechende Formfläche besitzt, einschließlich Ausnehmungen für die Pads und der ein schmelzflüssiger Glasposten zuführbar ist,
- einem Preßstempel, der die innere Kontur des Preßlings vorgibt und an dem ein auf der Form flach aufliegender Ring zur Ausformung der flächigen Oberkante des Trichters federnd gehaltert ist.

Bildröhren, insbesondere Fernsehbildröhren oder solche für Computer-Monitore, werden glasmäßig aus drei separat hergestellten Glasteilen zusammengesetzt, nämlich dem eigentlichen Bildschirm, dann dem Rückteil der Bildröhre, Trichter genannt, und schließlich dem Bildröhrenhals zur Aufnahme des Strahlsystems.

Bei der Herstellung der Bildröhre wird der Trichter, an dessen Bund eine umlaufende plane Verbindungsfläche - auch Lötkante genannt - ausgebildet ist, mit dem Schirm, an dem eine entsprechende Lötkante ausgebildet ist, mit Hilfe von Glaslot vakuumdicht verbunden. Das pastöse Glaslot wird auf die Lötkante des Trichters aufgetragen. Der Trichter wird in ein schräg angeordnetes Metallgestell, mit Lötkante nach oben, eingelegt. Der Schirm wird mit seiner Lötkante nach unten auf das Glaslot aufgelegt. Im anschließenden Tempervorgang schmilzt das Lot auf, Trichter und Schirm verbinden sich zur Röhre.

Für die Funktion der Bildröhre ist hierbei eine exakte Ausrichtung des Trichters zum Schirm erforderlich; bei Fehlausrichtung kommt es zum Versatz des im Hals des Trichters befindlichen Strahlsystems zur Schirmfläche. Zur Sicherstellung der Ausrichtung während des Verschmelzvorganges sind am Trichter im Bereich des Bundes typischerweise drei erhabene Anlageflächen, sogenannte Pads, angeformt. Der Schirm ist ebenfalls mit drei Anlageflächen versehen. Den Anlageflächen an Schirm und Trichter sind Anlagepunkte im Metallgestell zugeordnet. Durch die Schräglage wird sichergestellt, daß sich Schirm und Trichter an die Anlageflächen anlegen und damit eine definierte Ausrichtung von Trichter und Schirm erreicht wird.

Danach wird der Bildröhrenhals mit bekannten Methoden am anderen Ende des Trichters angeformt.

Diese Technologie der Bildröhren-Herstellung ist Stand der Technik und in einschlägigen Veröffentlichungen beschrieben, so daß an dieser Stelle hierzu keine weiteren Ausführungen notwendig sind.

Die Erfindung bezieht sich auf die Herstellung des Trichters. Zur Fertigung dieser Trichter findet in bekannter Weise weltweit die Preßtechnologie Anwendung. Schmelzflüssige Glasposten werden unter Einsatz der typischen formgebenden Werkzeuge: Form, Ring, und Preßstempel, zu Trichtern gepreßt. Üblicherweise kommen dabei Rundtischpressen zum Einsatz, bei denen elf bis fünfzehn baugleiche Formen auf dem Preßtisch montiert sind. Die Formen werden mit jedem Takt der Presse zum nächsten Verarbeitungsschritt transportiert.

Mit der Form wird die Außenseite des Trichters, mit dem Preßstempel die Innenseite geformt.

Zur Formung der Abschlußkante des Trichters wird das dritte Werkzeug benötigt, der Ring. Der Ring wird vor dem Preßvorgang auf die Form aufgelegt und während des Pressens mit Federkraft auf die Form gedrückt. Nachdem der Glastropfen in die Form geladen wurde, wird dieser in der Preßstation mit Hilfe des herabfahrenden Stempels unter hoher Preßkraft ausgepreßt. Stempel und Ring sind mit sehr genauer Passung angefertigt. Bei ausreichender Preßkraft wird der Hohlraum der drei Werkzeuge vollständig mit Glas gefüllt, wobei sich typischerweise zwischen Ring und Form eine Formnaht ausbildet. Diese Formnaht muß am größten Umfang des Trichters liegen, damit sowohl der Ring, als auch die Form entformt werden können. Beim Auffahren des Stempels übernimmt der Ring zusätzlich die Funktion, das Glasteil abzustreifen.

An nachfolgenden Kühlstationen wird der ausgepreßte Trichter so weit gekühlt, daß das Produkt an der anschließenden Entnahmestation ohne Deformation entnommen werden kann.

Vor der Entnahme muß der Ring, da er den Trichter von oben abdeckt, von der Form abgenommen werden.

Es ist bekannt, hierzu den Ring über eine Federplatte in der Preßstation fest mit dem Preßstempel zu montieren. Der Ring wird dann beim Abfahren des Stempels auf die Form gepreßt und beim Hochfahren, nach Überwindung des Federweges, abgenommen. Bei dieser Technologie ist nur ein in der Preßstation verbleibender Ring im Einsatz. Bei der europäischen Methode wird ein formseitig ebener Ring auf die Form aufgelegt. Die Formnaht entsteht daher an der Oberkante des Trichters. Da die gepreßte Trichteroberkante während der an die Heißformgebung anschließenden Fertigbearbeitung zu einer Planfläche, der Lötkante, abgeschliffen und gefast wird, wird auch die Formnaht mit abgeschliffen und ist dann am fertigen Trichter nicht mehr vorhanden. Die potentielle Gefahr, daß von dieser Formkante betriebliche Störungen, wie Rißbildung bis hin zur Implosion, ausgehen, ist daher bei den nach dem europäischen Verfahren hergestellten Bildröhren nicht gegeben.

Wie bereits erwähnt, müssen an dem Trichter im äußeren Bundbereich die sogenannten Pads vorhanden sein. Diese erhaben ausgebildeten Pads werden typischerweise beim Pressen des Trichters mit angeformt. Dazu besitzt die Form im Bereich der Pads entsprechende Ausnehmungen.

Aufgrund der beschriebenen Entformungsbedingungen ist es zwingend, daß die erhabenen Pads bei den nach europäischer Methode hergestellten Trichtern bis zur Lötkante gezogen sind, da ansonsten Hinterschnitte in der Form entstünden, die eine Entformung verhinderten.

Nachteilig bei den bis zur Lötkante gezogenen Pads ist, daß sich die Lötkante in diesem Abschnitt um die Erhabenheit der Pads verbreitert, d.h. die Lötkante nicht mehr umlaufend gleich breit ist. Durch Oberflächeneffekte verläuft dann beim Verbinden des Trichters mit dem Schirm das Glaslot in diesen Abschnitten inhomogen zur restlichen Lötkante, eine Störstelle entsteht, erhöhte Spannungen können auftreten.

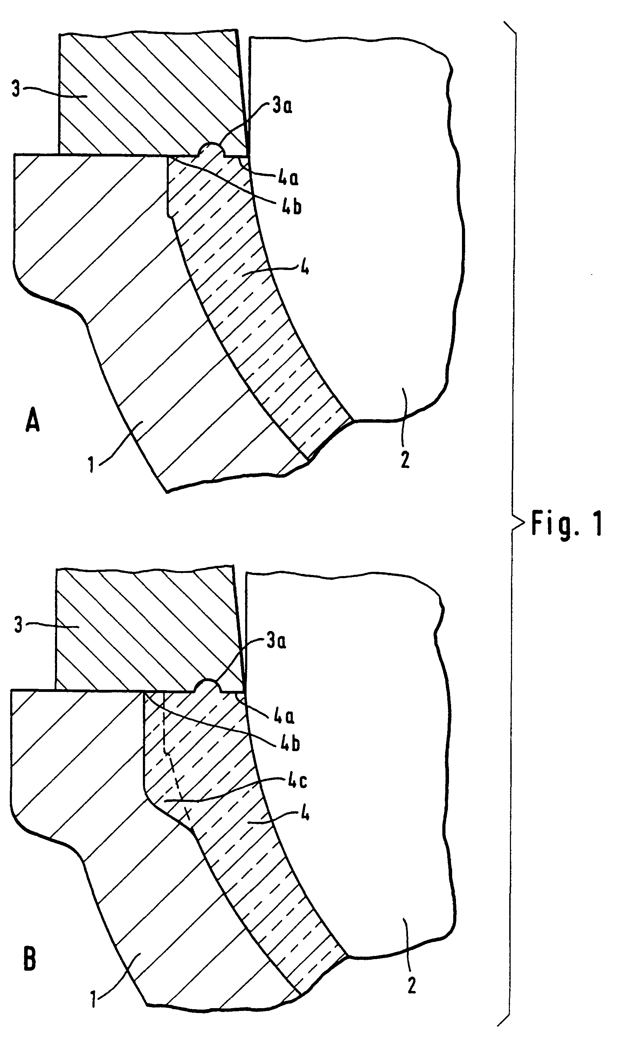

In der Figur 1 ist in zwei Teilschnittansichten diese bekannte Formgebung des Bundbereiches des Trichters beim Pressen schematisch dargestellt, und zwar im Figurenteil A mit einem Schnitt im padfreien Bund und im Figurenteil B mit einem Schnitt im Padbereich.

Zwischen einer Form 1, dem eingedrungenen Preßstempel 2 und dem auf der Form 1 aufliegenden Ring 3, entsteht der Glastrichter 4. Die beschriebenen formgebenden Werkzeuge sind dabei der Einfachheit halber nur schematisch dargestellt.

Der Ring 3 weist typischerweise eine umlaufende Rille 3a auf, die der Stabilität des geformten Trichters im noch plastischen Zustand dient, und die später im Rahmen des Planschleifens der Oberkante 4a des Trichters zur Lötkante mit weggeschliffen wird, einschließlich der Formkante 4b, die technologiebedingt zwischen Ring 3 und Form 1 entsteht.

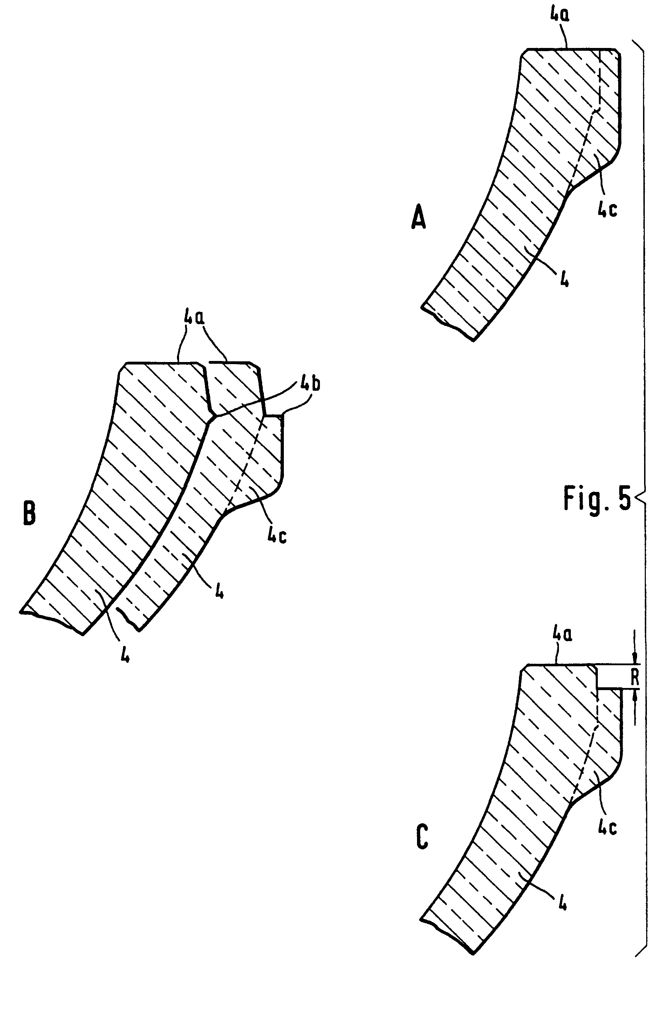

Wie aus dem Vergleich zwischen den Figurenteilen A und B hervorgeht, ist im Bereich der erhabenen Pads 4c (Teil B) die Oberkante 4a um die Erhabenheit der Pads breiter als im padfreien Bundbereich (Ansicht A), wobei der besseren Erkennbarkeit wegen der Padbereich 4c gestrichelt gegenüber der Kontur des Trichters 4 abgegrenzt ist. Es entsteht nach der Fertigbearbeitung ein "Paddesign" entsprechend Figur 5, Teil A mit an der Lötkante 4a hochgezogenem Pad 4c ohne Formnaht.

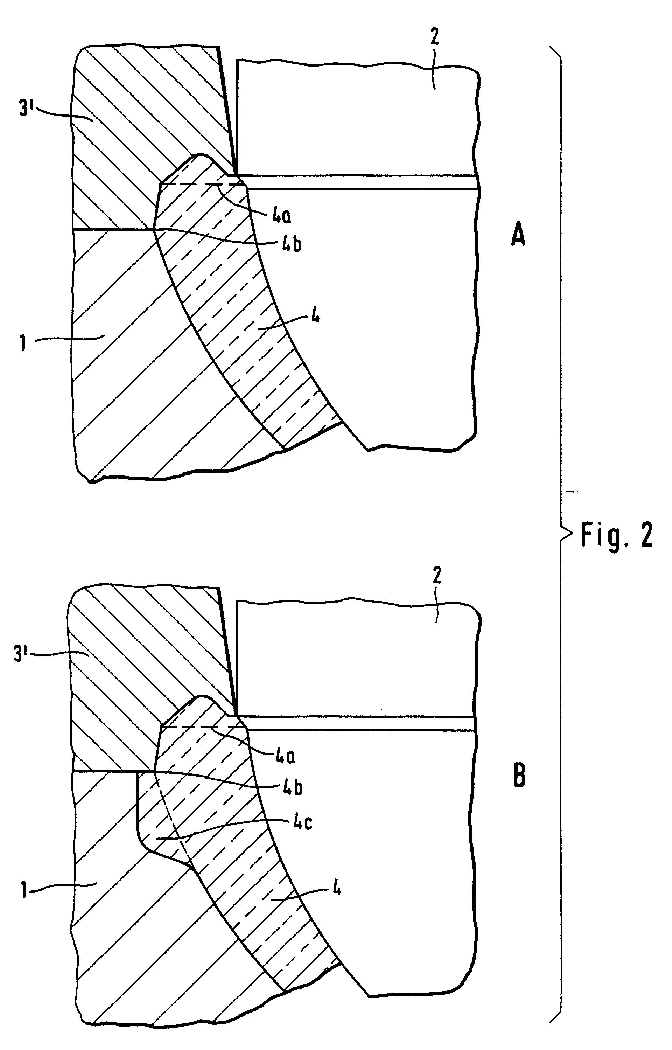

Es ist auch eine Technologie bekannt - im folgenden als asiatische Methode bezeichnet - die beim Pressen des Trichters 4 eine umlaufend gleich breite Oberkante 4a bewirkt. Der Preßvorgang nach dieser Methode ist in TeilschnittAnsichten entsprechend der Figur 1 in der Figur 2 dargestellt.

Beim asiatischen Verfahren wird der Bund des Trichters vollständig im Ring 3' geformt. Der Ring 3' besitzt daher im Gegensatz zu dem Ring 3 nach Figur 1 für das europäische Verfahren keine ebene Unterseite sondern eine dreidimensionale Kontur, die den Bundbereich umgreift. Neuere asiatische Verfahren benutzen einen Ring, der über eine Federplatte, wie bereits weiter vorne beschrieben, mit dem Preßstempel verbunden ist. Es sind aber auch ältere Verfahren bekannt, bei denen mehrere Ringe vorhanden sind, die mittels eines Ringumsetzers gehandhabt werden. In jedem Fall wird jedoch der Bund des Trichters in dem Ring 3' geformt, der mit dem Glas in Berührung kommt.

Bei den nach dieser asiatischen Methode hergestellten Trichtern können die Pads 4c in die Ebene zwischen Lötkante und Formnaht zurückgesetzt werden, denn dieser Bereich wird im Ring 3' geformt. Es entstehen daher keine Hinterschnitte und auch die Lötkante 4a ist umlaufend gleich breit ausgeformt, jedoch treten Probleme bedingt durch die Formnaht 4b auf.

Bedingt durch Werkzeugtoleranzen und verbleibendem Spalt zwischen den Formgebungsteilen Form und Ring, ist die Formnaht 4b als für Werkzeugnähte typischer umlaufender Wulst ausgebildet. Diese äußere umlaufende Formnaht 4b liegt einige Millimeter unterhalb der Trichterkante 4a. Zwar wird auch beim asiatischen Verfahren die Trichterkante 4a geschliffen. Die Formnaht 4b liegt aber so weit unterhalb dieser Kante, daß sie beim Schleifen nicht mehr entfernt wird. Sie bleibt daher am fertigen Produkt erhalten. Diese Formnaht ist eine Schwachstelle am Produkt, da sie exponiert am größten Umfang der späteren Bildröhre liegt und die Röhre in Folge der Evakuierung unter hoher Spannung steht. Bei Anschlägen an die umlaufende Formnaht besteht die Gefahr von Rißbildung und Implosion.

Ein zusätzlicher Nachteil der asiatischen Methode liegt in der aufwendigen Anfertigung der Ringe 3'. Während die für die europäische Methode benötigten Ringe 3 in der Auflagefläche lediglich geschliffen werden, müssen die Ringe 3' für die asiatische Methode aufwendig nach dreidimensionaler Kontur gefräst werden. Die umlaufende Kontur des Ringes 3' im quasi senkrechten Teil muß sehr gut mit der Kontur der Form 1 übereinstimmen, wobei die durch unterschiedliche Temperaturen der Werkzeuge entstehenden Wärmedehnungen durch Vorhaltemaße berücksichtigt werden müssen.

Die Anforderung nach exakter Ausrichtung von Form und Ring steigt bei der asiatischen Methode ebenfalls, jeglicher Versatz führt zur Verbreiterung der Formnaht 4b mit den beschriebenen negativen Auswirkungen.

Zur Einhaltung der geforderten Toleranzen muß der Ring 3' bei der asiatischen Methode mittels Führungskeilen an der jeweiligen Form ausgerichtet werden. Da der Stempel 2 zur Einhaltung der benötigten Fassung exakt im Ring geführt werden muß, entsteht durch die zusätzliche Keilführung zwischen Ring und Form ein überbestimmtes System. Zur Vermeidung von Schäden an Presse und Werkzeugen muß der Preßstempel schwimmend in der Presse gelagert werden. Daraus resultiert ein wesentlich aufwendigerer Aufbau der Preßstation, als bei der europäischen Methode, bei der der Stempel fest in der Preßstation montiert werden kann.

Der Erfindung liegt die Aufgabe zugrunde, ausgehend von der europäischen Methode diese so weiterzubilden, daß ein Ausformen von unter die Oberkante zurückgesetzten Pads und damit ein Ausformen einer umlaufend gleich breiten Oberkante ohne umlaufende Formnaht möglich ist.

Die Lösung dieser Aufgabe gelingt ausgehend von dem eingangs bezeichneten Verfahren für dieses Verfahren dadurch, daß zumindest im Schritt des Verpressens in die Form im Bereich der Pads, mit der Formoberkante bündig abschließende, bewegliche ebene Formteile eingelegt werden, deren Dicke das Maß des Zurücksetzens der Pads vorgibt, und die entsprechend der anzuformenden Oberkante der Pads in den Formraum hineinragen und nach der Ausformung des Trichters aus diesem wegbewegt werden.

Ausgehend von der eingangs bezeichneten Vorrichtung gelingt die Lösung der Aufgabe für die Vorrichtung dadurch, daß die Form im Bereich der Pads mit Ausnehmungen versehen ist, in die mit der Formoberkante bündig abschließende, bewegliche ebene Formteile einlegbar sind, deren Dicke entsprechend dem Maß des Zurückversetzens der Pads bestimmt ist, deren radiale Längenausdehnung so bestimmt ist, daß sie entsprechend der anzuformenden zurückversetzten Oberkante der Pads in den Formraum hineinragen, und die so angeordnet sind, daß sie nach dem Ausformen des Trichters aus dem Formraum wegbewegbar sind.

Während des Preßvorgangs werden die beweglichen, eingelegten Formteile durch die Anpreßkraft des Ringes in der Position gehalten. Im anschließenden Entformungsvorgang können durch Anheben, oder Verschieben der beweglichen Formteile die Trichter trotz des Hinterschnittes im Bereich der Pads entformt werden.

Die Formnaht liegt dabei im Bereich der Oberkante des Trichters und kann daher im Rahmen des Planschleifens der Oberkante zur Lötkante mit weggenommen werden. Mit der Erfindung lassen sich daher sozusagen die Vorteile der europäischen und der asiatischen Methode miteinander verbinden: Von der Oberkante zurückgesetzte Pads, d.h. in eine umlaufend gleiche Breite der Oberkante, jedoch ohne umlaufende Formnaht bei einfacher Werkzeugausführung und einfacher Preßtechnologie.

Die beweglichen Formteile können hinsichtlich ihrer Betätigung fremdbetätigt, z.B. mittels Druckluft oder eines Anschlages am Preßstempel, oder eigenbetätigt sein, z.B. durch Betätigungen im Preßvorgang selbst. Gerade letzterer Ausgestaltung kommt eine vorteilhafte Bedeutung bei, da keine zusätzlichen Elemente benötigt werden.

Gemäß einer weiteren Ausgestaltung der Erfindung können die einlegbaren Formteile verschiebbar in der Form angeordnet sein. Sie werden dann vorzugsweise als fremdbetätigte Riegel oder Drehschieber ausgebildet.

Besondere Vorteile werden gemäß einer Ausgestaltung der Erfindung erzielt, wenn die einlegbaren Formteile anhebbar an der Form angelenkt sind, insbesondere in Form von Klappen, die außen an der Form mit einer Welle angelenkt sind. Bei dieser Ausführung der beweglichen Formteile als Klappen ist es möglich, daß die Klappen während des Entformungsvorgangs durch den Trichter selbst angehoben werden und nach der Entformung schwerkraftbetätigt, d.h. selbsttätig, in die Ruheposition zurückfallen. Bei dieser Ausführung werden mit großem Vorteil keine weiteren Vorrichtungen oder Änderungen an Form und Presse benötigt.

Es versteht sich für den Fachmann, daß die beweglichen Formteile auch auf andere Weise als vorstehend beschrieben ausgeführt und betätigbar sind.

Anhand eines in den Zeichnungen dargestellten Ausführungsbeispieles wird die Erfindung näher beschrieben.

Es zeigen:
- Fig. 1: zwei Teilschnitte durch die Preßwerkzeuge im Bereich des Bundes eines Trichters einer Bildröhre bei der bekannten europäischen Methode,
- Fig. 2: zwei entsprechende Teilschnitte bei der Formgebung nach der bekannten asiatischen Methode.
- Fig. 3: zwei Teilschnitte entsprechend den Figuren 1 und 2 bei der Formgebung nach der erfindungsgemäßen Methode,
- Fig. 4: in einer schematischen Darstellung eine Ausführung der einlegbaren beweglichen Formteile als eigenbetätigbare Klappen, und
- Fig. 5: in den Teilen A, B, C die Pad-Designs für die drei beschriebenen Methoden.

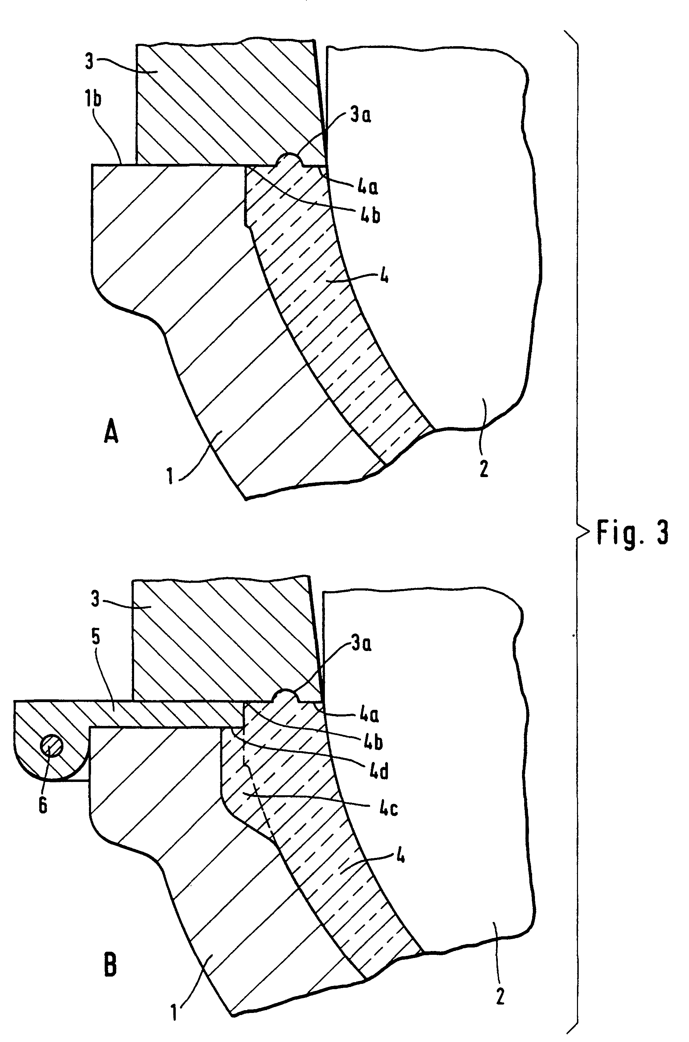

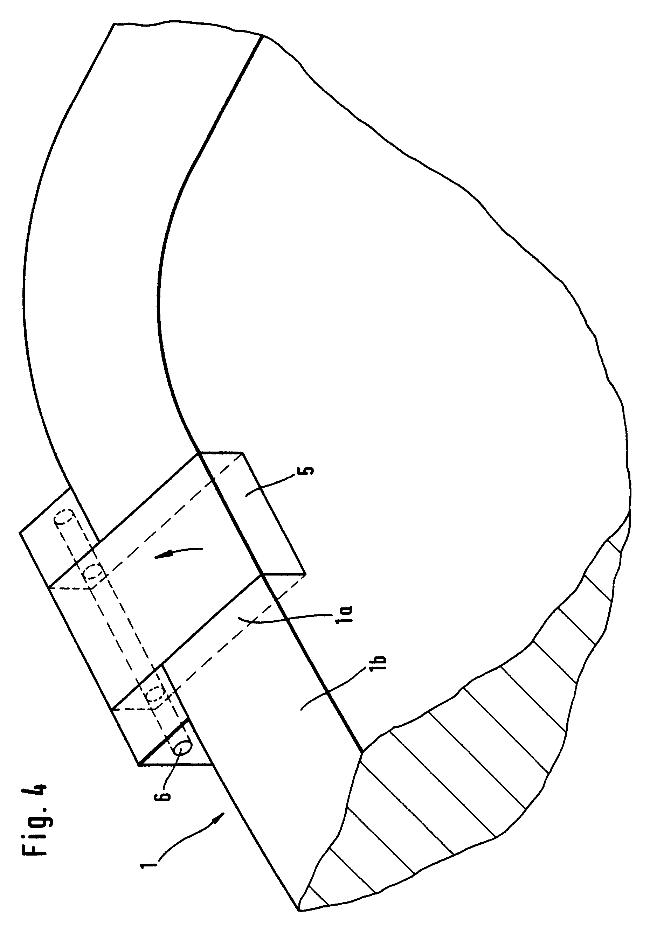

Die Fig. 3 zeigt entsprechend der bereits beschriebenen Darstellung in den Figuren 1 und 2 einen schematischen Teilschnitt durch eine Preßform 1, einem Preßstempel 2 und einem Ring 3 sowie den aus einem zuvor in die Form 1 eingebrachten schmelzflüssigen Glasposten verpreßten Trichter 4. Der Ring 3 ist in bekannter Weise mit dem Stempel 2 über eine Federplatte fest verbunden. Er wird beim Abfahren des Stempels 2 in die Form 1 unter Ausbildung der Oberkante 4 a des Trichters auf die Form aufgepresst. Die Form 1 besitzt ebenfalls wie bei dem europäischen Verfahren Ausnehmungen für Pads 4 c. Da insoweit das erfindungsgemäße Verfahren mit dem anhand der Fig. 1 beschriebenen europäischen Verfahren übereinstimmt, kann auf die entsprechenden Ausführungen hier Bezug genommen werden. Der Unterschied zu dem bekannten europäischen Verfahren liegt in der Ausformung der Pads 4 c. Daher ist die Fig. 3 Teil A mit dem Figurenteil 1 A identisch. Im Gegensatz zu der Ausführung nach Fig. 1 B mit dem zur Formoberkante hochgezogenen Pad 4 c besitzt bei der erfindungsgemäßen Ausgestaltung der Preßvorrichtung gemäß Fig. 3 B und der Darstellung in Fig. 4 die Form 1 im Bereich der Pads 4 c eine Ausnehmung 1 a. in die ein mit der Formoberkante 1 b bündig abschließendes, bewegliches ebenes Formteil, in diesem Ausführungsbeispiel in Form einer über eine Welle 6 an der Form 1 drehbar angelenkten Klappe 5, einlegbar ist.

Wie insbesondere die Fig. 3 B erkennen läßt, ist der angeformte Pad 4 c um die Dicke des eingelegten Formteiles von der Oberkante 1 b der Form 1, und damit von der späteren Lötkante 4 a, nach unten versetzt, d.h. hinterschnitten.
Die radiale Längsausdehnung des Formteiles 5 ist dabei so bestimmt, daß es entsprechend der anzuformenden Oberkante 4 d des Pads 4 c in den Formraum zwischen Form 1 und Stempel 2 hineinragt.

Durch die Anlenkung der Klappen 5 an der Form 1 ist auf einfache Weise gewährleistet, daß die Klappen während des Entformungsvorganges durch den ausgeformten, angehobenen Trichter, den Formraum freigebend, anhebbar sind und nach der Entformung selbsttätig aufgrund der Schwerkraft wieder in die Ausgangslage gemäß Fig. 4 zurückfallen.

Die beschriebene Ausführungsform erlaubt auf eine vorteilhaft einfache Weise die Herstellung von hinterschnittenen Pads gemäß dem Design nach Fig. 5 c, die um das Maß "R" gegenüber der Lötkante 4 a zurückgesetzt sind, ohne daß eine umlaufende Formnaht 4 b, an dem fertig bearbeiteten Trichter verbleibt, da diese beim Schleifen der Oberkante, in deren Bereich sie liegt, mit weggeschliffen werden kann.

Die durch die Geometrie der Formteile bestimmten Formnähte entstehen bei dem erfindungsgemäßen Verfahren ausschließlich im Bereich der Pads. Die Formnähte bleiben kurz und sind kaum sichtbar, da die Formteile an der Form fixiert sind. vorzugsweise aus Material gleicher Wärmeausdehnung wie die Form bestehen und zudem durch die über den Ring 3 übertragene Preßkraft angepresst werden. Ein Versatz im Bereich der Naht ist fast vollständig ausgeschlossen; die Außenkontur der Trichter 4 wird ausschließlich durch die Form 1 und die eingelegten Formteile 5 gebildet. Sie haben eine feste Zuordnung und nehmen während des Einsatzes nahezu die gleiche Temperatur an.

Dies ist bei der asiatischen Methode nicht der Fall, da Form 1 und Ring 3' nicht fest zugeordnet sind, einen unterschiedlichen Energieeintrag erfahren und infolge der unterschiedlichen Wärmeausdehnung von Ring 3' und Form 1 oftmals ein erheblicher Versatz entsteht.

Unabhängig von asiatischer und europäischer Methode werden die Pads in bekannter Weise entweder mit Übermaß hergestellt und in einem anschließenden Schleifprozeß auf exaktes Maß geschliffen oder direkt auf Sollmaß gepreßt, sogenannte "as pressed Pads". Die Erfindung ist für beide Methoden uneingeschränkt anwendbar.

Die Erfindung ist auch anwendbar, wenn das Fasen der Kante bzw. das Schleifen der Oberkante durch angepresste Fasen bzw. auf Maß angepresste Lötflächen ("as pressed Lötflächen") genannt, zum Einsatz kommen.

Die Erfindung ist grundsätzlich nicht auf das beschriebene Produkt beschränkt. Sie ist bei allen Preßglasfertigungen, bei denen am Produkt Hinterschnitte im Bereich der Form-/Ringnaht benötigt werden, einsetzbar.

## Patentansprüche

1. Verfahren zum Herstellen von Trichtern von Bildröhren mit angeformten Justier-Anlageflächen (4 c), Pads genannt, nach der Preßtechnologie, mit den Schritten:
- Zuführen eines schmelzflüssigen Glaspostens in eine der äußeren Kontur des Preßlings entsprechende Form (1),
- Verpressen des Glaspostens mittels eines die innere Kontur des Preßlings vorgebenden Stempels (2) und eines auf der Form (1) aufliegenden, am Stempel (2) federnd befestigten Ringes (3) zu dem Trichter mit flächiger umlaufender Oberkante (4a) und angeformten Pads (4 c),
**dadurch gekennzeichnet**, daß zumindest im Schritt des Verpressens in die Form (1) im Bereich der Pads (4c) mit der Formoberkante bündig abschließende, bewegliche ebene Formteile (5, 6) eingelegt werden, deren Dicke das Maß des Zurücksetzens der Pads vorgibt, und die entsprechend der anzuformenden zurückgesetzten Oberkante der Pads in den Formraum hineinragen und nach der Ausformung des Trichters aus diesem wegbewegt werden.

2. Verfahren nach Anspruch 1, **dadurch gekennzeichnet**, daß die eingelegten beweglichen Formteile (5, 6) fremdbetätigt werden.

3. Verfahren nach Anspruch 1, **dadurch gekennzeichnet**, daß die eingelegten beweglichen Formteile (5, 6) eigenbetätigt werden.

4. Vorrichtung zum Herstellen von Trichtern (4) von Bildröhren mit angeformten Justier-Anlageflächen (4 c), Pads genannt, durch Pressen, mit
- einer Form (1), die eine der äußeren Kontur des Preßlings entsprechende Formfläche besitzt, einschließlich Ausnehmungen für die Pads (4c) und der ein schmelzflüssiger Glasposten zuführbar ist,
- einem Preßstempel (2), der die innere Kontur des Preßlings vorgibt und an dem ein auf der Form (1) flach aufliegender Ring (3) zur Ausformung der flächigen Oberkante (4a) des Trichters federnd gehaltert ist,
**dadurch gekennzeichnet**, daß die Form (1) im Bereich der Pads (4c) mit Ausnehmungen (1a) versehen ist, in die mit der Formoberkante (1b) bündig abschließende, bewegliche, ebene Formteile (5, 6) einlegbar sind, deren Dicke entsprechend dem Maß des Zurücksetzens der Pads bestimmt ist, deren radiale Längsausdehnung so bestimmt ist, daß sie entsprechend der anzuformenden zurückgesetzten Oberkante (4d) der Pads (4c) in den Formraum hineinragen, und die so angeordnet sind, daß sie nach dem Aasformen des Trichters (4) aus dem Formraum wegbewegbar sind.

5. Vorrichtung nach Anspruch 4, **dadurch gekennzeichnet**, daß die einlegbaren Formteile verschiebbar in der Form (1) angeordnet sind.

6. Vorrichtung nach Anspruch 5, **dadurch gekennzeichnet**, daß die einlegbaren Formteile als längsverschiebbare Riegel oder als Drehschieber ausgebildet sind.

7. Vorrichtung nach Anspruch 5, **dadurch gekennzeichnet**, daß die einlegbaren Formteile anhebbar an der Form (1) angelenkt sind.

8. Vorrichtung nach Anspruch 7, **dadurch gekennzeichnet**, daß die Formteile als Klappen (5) ausgebildet sind, die außen an der Form (1) mit einer Welle (6) angelenkt sind, derart, daß sie während des Entformungsvorganges durch den ausgeformten angehobenen Trichter (4), den Formraum freigebend, anhebbar sind und nach der Entformung schwerkraflbetätigt selbstätig in die Ausgangslage zurückfallen.

9. Vorrichtung nach einem der Ansprüche 4 bis 8, **dadurch gekennzeichnet**, daß die beweglichen einlegbaren Formteile aus einem Material mit gleichem. Wärmeausdehungskoeffizienten wie desjenigen des Materials der Form (1) bestehen.

## Claims

1. Method for producing funnels of picture tubes with adjustment bearing faces (4c), called pads, molded on by the pressing technique, having the following steps:
- delivering a molten gob of glass to a mold (1) corresponding to the outer contour of the blank,
- pressing the gob of glass, by means of a die (2) that predetermines the inner contour of the blank and by means of a ring (3) resiliently secured to the die (2) and resting on the mold (1), to form the funnel with a flat encompassing upper edge (4a) and mold-on pads (4c),
**characterized in that** at least in the step of pressing into the mold (1), movable flat molded parts (5, 6) are placed in the region of the pads (4c), flush with the upper edge of the mold, the thickness of which molded parts predetermines the extent of recessing of th pads, and which molded parts protrude into the mold cavity in accordance with the recessed upper edge of the pads that is to be molded on and are moved out of the funnel after the funnel has been molded.

2. Method according to Claim 1, **characterized in that** the movable molded parts (5, 6) put in place are externally actuated.

3. Method according to Claim 1, **characterized in that** the movable molded parts (5, 6) put in place are self-actuated.

4. Apparatus for producing funnels (4) of picture tubes with molded-on adjustment bearing faces (4c), called pads, by pressing, having
- a mold (1), which has a mold surface corresponding to the outer contour of the blank, including recesses for the pads (4c), and into which a molten gob of glass can be delivered,
- a pressing die (2), which predetermines the inner contour of the blank and on which a ring (3), resting flatly on the mold (1), is resiliently retained for molding the flat upper edge (4a) of the funnel,
**characterized in that** the mold (1), in the region of the pads (4c), is provided with recesses (1a) into which the movable flat molded parts (5, 6) that are flush with the upper edge (1b) of the mold can be placed, the thickness of which molded parts is determined in accordance with the extent of recessing of the pads and whose radial length is determined such that they protrude into the mold cavity in accordance with the recessed upper edge (4d), to be molded on, of the pads (4c), and are arranged such that after the funnel (4) has been molded, they can be moved out of the mold cavity.

5. Apparatus according to Claim 4, charactgerized in that the molded parts that can be put in place are disposed displaceably in the mold (1).

6. Apparatus according to Claim 5, **characterized in that** the molded parts that can be put in place are embodied as longitudinally displaceable bars or as rotary slides.

7. Apparatus according to Claim 5, **characterized in that** the mold parts that can be put in place are pivotably connected in raisable fashion to the mold (1).

8. Apparatus according to Claim 7, **characterized in that** the mold parts are embodied as flaps (5), which are pivotably connected on the outside of the mold (1) to a shaft (6), in such a way that during the unmolding operation they can be raised, uncovering the mold cavity, by the molded, raised funnel (4) and after the unmolding drop automatically by gravity back into the outset position.

9. Apparatus according to one of Claims 4-8, **characterized in that** the movable molded parts that can be put in place comprise a material having the same coefficient of thermal expansion as the material of the mold (1).

## Revendications

1. Procédé de fabrication de cônes de tubes cathodiques avec des faces de pose ajustée façonnées (4c), dites bossages, suivant la technologie du pressage, comprenant les étapes:
- apport d'une paraison en fusion dans un moule (1) correspondant au contour extérieur de l'ébauche,
- pressage de la paraison au moyen d'un poinçon (2) définissant le contour intérieur de l'ébauche et d'une bague (3) fixée élastiquement au poinçon (2) et reposant sur le moule (1) à la forme du cône avec une arête supérieure périphérique plate (4a) et des bossages façonnés (4c),
**caractérisé en ce qu**'au moins dans l'étape du pressage dans le moule (1), on pose dans la région des bossages (4c), à fleur de l'arête supérieure du moule, des pièces de forme planes mobiles (5, 6), dont l'épaisseur définit la mesure du retrait des bossages, et qui pénètrent dans l'espace du moule de façon correspondante à l'arête supérieure à façonner en retrait des bossages et qui sont retirées hors de celui-ci après le formage du cône.

2. Procédé suivant la revendication 1, **caractérisé en ce que** les pièces de forme mobiles introduites (5, 6) sont actionnées de l'extérieur.

3. Procédé suivant la revendication 1, **caractérisé en ce que** les pièces de forme mobiles introduites (5, 6) sont actionnées par elles-mêmes.

4. Dispositif de fabrication de cônes (4) de tubes cathodiques avec des faces de pose ajustée façonnées (4c), dites bossages, par pressage, avec
- un moule (1), qui possède une face de moulage correspondant au contour extérieur de l'ébauche, y compris des creux pour les bossages (4c) et dans lequel on peut apporter une paraison en fusion,
- un poinçon de pressage (2), qui définit le contour intérieur de l'ébauche et sur lequel une bague (3) appliquée à plat sur le moule (1) est maintenue élastiquement pour former l'arête supérieure plate (4a) du cône,
**caractérisé en ce que** le moule (1) est pourvu dans la région des bossages (4c) de creux (1a) dans lesquels on peut poser des pièces de forme planes, mobiles (5, 6) se terminant à fleur de l'arête supérieure (1b) du moule, dont l'épaisseur est déterminée suivant la mesure du retrait des bossages, dont la dimension radiale est déterminée de manière telle qu'elles pénètrent dans l'espace du moule de façon correspondante à l'arête supérieure (4d) à façonner en retrait des bossages (4c), et qui sont disposées de manière telle qu'elles puissent être retirées hors de l'espace du moule après le formage du cône (4).

5. Dispositif suivant la revendication 4, **caractérisé en ce que** les pièces de forme à insérer sont disposées de façon coulissante dans le moule (1).

6. Dispositif suivant la revendication 5, **caractérisé en ce que** les pièces de forme à insérer présentent la forme de verrous à coulissement longitudinal ou de verrous rotatifs.

7. Dispositif suivant la revendication 5, **caractérisé en ce que** les pièces de forme à insérer sont articulées de manière soulevable sur le moule (1).

8. Dispositif suivant la revendication 7, **caractérisé en ce que** les pièces de forme ont la forme de clapets (5), qui sont articulés extérieurement sur le moule (1) avec un arbre (6), de manière telle qu'elles puissent être soulevées par le cône (4) moulé soulevé pendant l'opération de démoulage, en libérant l'espace du moule et qu'après le démoulage, elles retombent automatiquement dans la position initiale sous l'action de la gravité.

9. Dispositif suivant l'une quelconque des revendications 4 à 8, **caractérisé en ce que** les pièces de forme mobiles à insérer se composent d'une matière ayant le même coefficient de dilatation thermique que celui de la matière du moule (1).
